# EUROPEAN PATENT SPECIFICATION

(11) **EP 3 055 733 B1**
(45) Date of publication and mention of the grant of the patent: **16.01.2019**
(21) Application number: 14792929.3
(22) Date of filing: 08.10.2014
(51) Int. Cl.: G03B 17/14, G02B 7/02, H04N 5/225

(54) **INTERFACE GEOMETRY FOR CAMERA MOUNTING**
GEOMETRISCHE SCHNITTSTELLE FÜR KAMERAMONTAGE
INTERFACE GEOMETRIQUE POUR MONTAGE DE CAMERA

(30) Priority: 11.10.2013 US 201314052389
(43) Date of publication of application: 17.08.2016
(73) Proprietor: Microsoft Technology Licensing, LLC, Redmond, WA 98052 (US)
(72) Inventor: GALEL, Daniel M., Redmond, Washington 98052-6399 (US)
(74) Representative: Goddar, Heinz J.
(86) International application number: PCT/US2014/059584
(87) International publication number: WO 2015/054327

(56) References cited:
- US-A1- 2006 124 746
- US-A1- 2007 077 051
- US-A1- 2009 009 975
- US-A1- 2009 252 488
- US-A1- 2010 007 757
- US-A1- 2012 274 800

## Description

### BACKGROUND

Camera systems may be found in an ever increasing variety of devices. Examples of such devices include mobile communication devices such as tablets, smartphones, and so on that are configured to be held by one or more hands of a user. As such, size of the mobile communication device may be a driving factor in user selection of the device.

Conventional techniques to mount camera systems, however, consume valuable space within a housing of the device as well as create difficulties in aligning the camera lens (and consequently field-of-view) to an aperture of the housing in order to minimize this consumption of space. Consequently, use of these conventional techniques could result in an increase in device thickness as well as an increase in manufacturing complexity and costs.

### SUMMARY

In one implementation, a assembly as defined in independent claim 1 includes one or more lens elements and a lens barrel configured to retain the one or more lens elements. The lens barrel includes a connection portion configured to provide a physical coupling to a camera module (e.g., a housing of the camera module) and an interface geometry having a complementary shape of an aperture of an external enclosure of a mobile computing device sufficient to align the lens barrel and the one or more lens elements in relation to the external housing.

In one implementation, a camera system as defined in independent claim 8 includes a camera module including a housing and one or more sensors configured to capture images. A lens barrel assembly is also included that is attached to the housing of the camera module and has an interface geometry configured to be disposed within an aperture of an external enclosure of an apparatus thereby aligning the lens barrel assembly and the camera module in relation to the external enclosure such that the one or more sensors are configured to capture images outside the external enclosure.

In one implementation, an apparatus as defined in independent claim 9 includes an external enclosure having an aperture formed therein and a camera system disposed within the external enclosure. The camera system includes a camera module having one or more sensors configured to capture images and a lens barrel assembly having an interface geometry configured to be disposed within the aperture of the external enclosure thereby aligning a field of view of the one or more sensors with the aperture.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items. Entities represented in the figures may be indicative of one or more entities and thus reference may be made interchangeably to single or plural forms of the entities in the discussion.
FIG. 1 is an illustration of an environment in an example implementation that is operable to employ the interface geometry techniques described herein.
FIG. 2 depicts an example implementation of a computing device of FIG. 1 as including an input device and showing mounting options of a camera system of FIG. 1.
FIG. 3 depicts an example implementation showing the camera system in greater detail as arranged in relation to an angle of an outer surface of the external enclosure as shown in the rear-facing camera system example of FIG. 2.
FIG. 4 depicts an example implementation in which an interface geometry of the camera system is illustrated as engaging an aperture of an external enclosure.
FIG. 5 depicts an example implementation showing a cross section of internal geometry of the camera module and lens barrel assembly in relation to the interface geometry and aperture.
FIG. 6 depicts an example implementation showing the lens barrel assembly and interface geometry in greater detail.
FIG. 7 illustrates an example system including various components of an example apparatus that can be implemented as any type of computing device as described with reference to FIGS. 1-6 to implement embodiments of the techniques described herein.

### DETAILED DESCRIPTION

### Overview

Conventional camera mounting techniques typically relied on brackets and other mounting hardware that was difficult to align and could consume valuable space within a housing of a device. Consequently, manufacturing costs of devices that utilized these conventional techniques could be significant and may result in defective products, an increase in overall size of the product, and so on.

Techniques involving an interface geometry for camera mounting is described. In one or more implementations, an interface geometry is included as part of a lens barrel assembly of a camera system that is formed in a complementary shape to an aperture of an external enclosure, e.g., a housing. In this way, the interface geometry may be configured to align a field of view of the camera system to an area outside of the external enclosure. Additionally, this may be used to support reduced heights of the camera system when mounted within a device, thereby promoting a thin form factor that may be desirable in mobile applications. Further discussion of these and other features may be found in relation to the following figures.

In the following discussion, an example environment is first described that may employ the techniques described herein. Although examples of devices and alignment techniques are described, it should be readily apparent that a wide variety of devices may avail themselves of these techniques without departing from the spirit and scope thereof.

### Example Environment

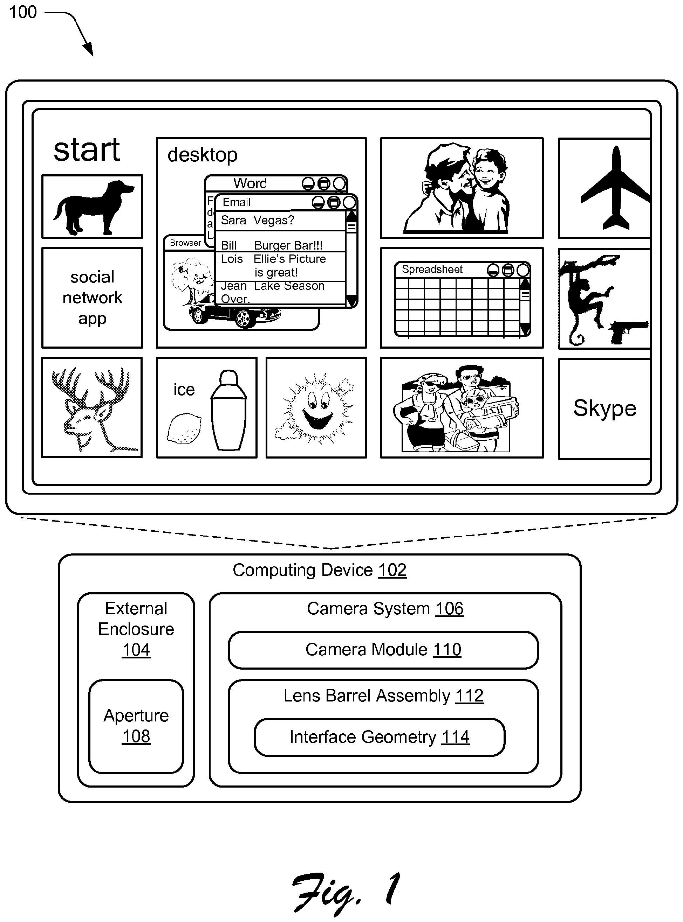

FIG. 1 is an illustration of an environment 100 in an example implementation that is operable to employ the techniques described herein. The illustrated environment 100 includes an example of a computing device 102. The computing device 102 may be configured in a variety of ways. For example, the computing device 102 may be configured for mobile use, such as a mobile phone, a tablet computer as illustrated, and so on. Thus, the computing device 102 may range from full resource devices with substantial memory and processor resources to a low-resource device with limited memory and/or processing resources. The computing device 102 may also relate to software that causes the computing device 102 to perform one or more operations. Although a computing device 102 is described as an example of an apparatus, a variety of other configurations are also contemplated, such a monitors and televisions, gaming devices, stand-alone cameras, and so on.

As the computing device 102 may assume a variety of different configurations, so too may an external enclosure 104 and camera system 106 of the computing device. For example, the external enclosure 104 may be configured to support a tablet configuration as illustrated, support a mobile phone, a housing of a television, game console, or gesture-detecting interface, and any other configuration that may contain a camera system 106. Additionally, the camera system 106 may be located in a variety of different locations of the external enclosure 104, such as to support rear and/or front facing usage as part of the apparatus.

The external enclosure 104 is illustrated as including an aperture 108. The aperture 108 is configured as a hole or gap through which the camera system 106, when disposed (e.g., mounted) within the external enclosure 104, may capture images of a scene that is disposed outside the external enclosure 104. As previously described, however, conventional mounting techniques could make it difficult to align a camera system 106 with the aperture 108. Accordingly, the camera system 106 may be designed to aid this alignment.

For example, the camera system 106 is illustrated as including a camera module 110 and a lens barrel assembly 112. The camera module 110 typically includes a housing that contains one or more sensors configured to capture an image, e.g., a charge coupled device (CCD) or other sensors. The lens barrel assembly 112 may include a lens barrel that contains one or more lens elements that are configured to direct light external to the external enclosure 104 to the sensors of the camera module 110. The lens barrel assembly 112 may also include other optical elements, for example, optical filters or light guides.

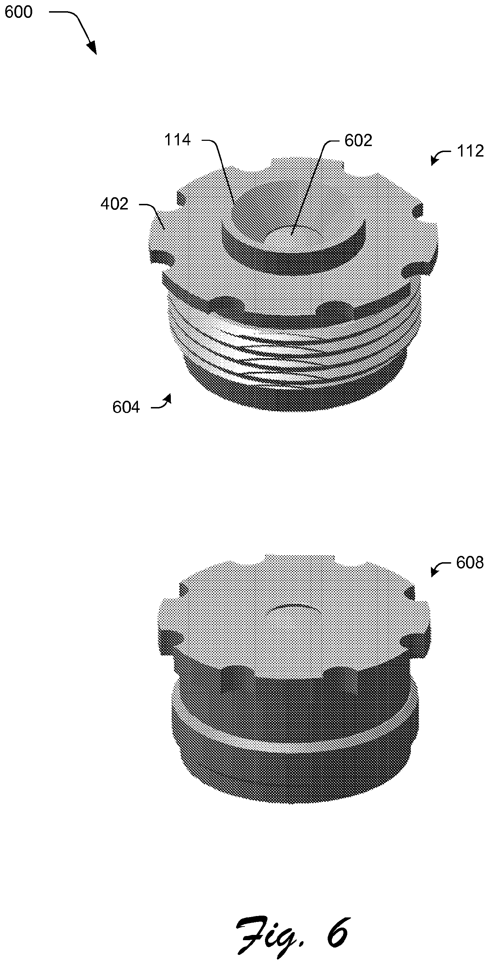

In one or more implementations, the lens barrel assembly 112 may be configured for removable attachment to the camera module 110 to support different uses of the camera module. As such, the lens barrel assembly 112 may be configured in a variety of ways, such as support of different focal lengths by different assemblies (e.g., each has a fixed, but different, focal length), support of adjustable focus (e.g., through movement of one or more of the lens elements), and so on. The removable attachment may be performed in a variety of ways, such as through use of one or more threads as shown in FIG. 6, a "snap" connection, and so on. A variety of other examples are also contemplated, such as an integrated camera module 110 that includes a lens barrel assembly 112, e.g., the integrated camera module 110 and lens barrel assembly 112 share a single housing.

The camera system 106 also includes an interface geometry 114, which may be formed as part of the lens barrel assembly 112 or other portion of the camera system 106. The interface geometry 114, for instance, may be configured to have a complementary shape of the aperture 108 such that when disposed within the aperture, the lens barrel assembly 112 is aligned in relation to the aperture 108 and external enclosure 104. This alignment may then also cause the camera module 110 to be aligned with the aperture 108, such that a field of view of sensors of the camera module 110 is positioned to capture images external to the external enclosure 104. The camera system 106, and more particularly the interface geometry 114 of the lens barrel assembly 112, may be configured in a variety of ways, an example of which is described in the following discussion of a figure.

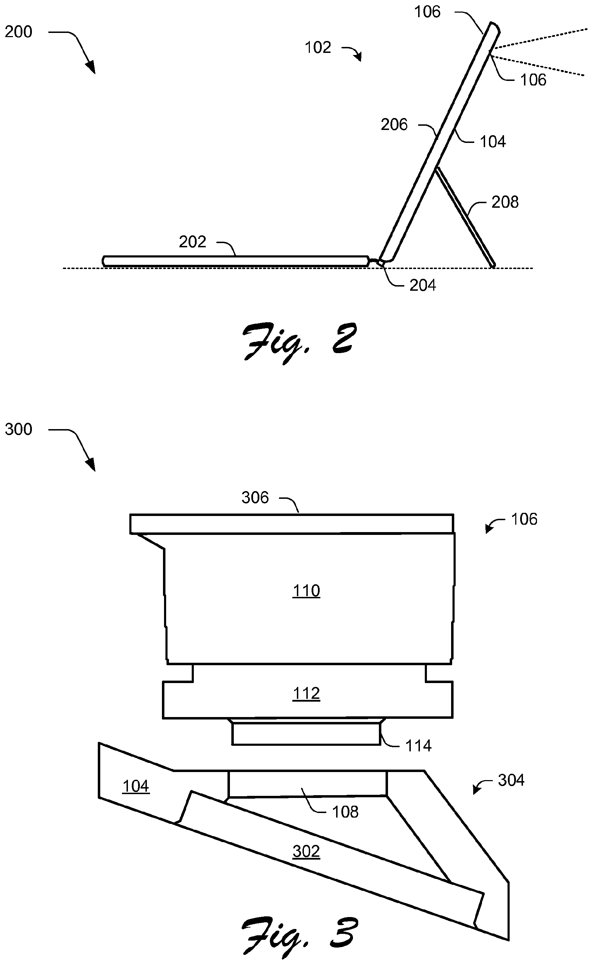

FIG. 2 depicts an example implementation 200 of the computing device 102 of FIG. 1 as including an input device and showing mounting options of the camera system 106 of FIG. 1. In the example implementation 200, the computing device 102 is communicatively and physically coupled to an input device 202 via a flexible hinge, e.g., via a magnetic connection device 204. The computing device 102 and input device 202 are illustrated as laid flat against a surface in a typing configuration. The computing device 102 is disposed at an angle to permit viewing of the display device 206. This is supported through use of a kickstand 208 disposed on a rear surface of the computing device 102 to contact the surface and support an external enclosure 104 of the computing device 102 as illustrated.

As is readily apparent from the figure, the computing device 102 is disposed at an angle. Accordingly, the camera system 106 may also be disposed at an angle (e.g., 22.5 degrees in relation to an outer surface at a rear of the external enclosure 104) to capture images. Other examples are also contemplated, such as an alignment in which a viewing axis is disposed generally perpendicular to a surface of the external enclosure, such as for a front facing camera system 106 in FIG. 2.

FIG. 3 depicts an example implementation 300 showing the camera system 106 in greater detail as arranged in relation to an angle of an outer surface of the external enclosure as shown in the rear-facing camera system example of FIG. 2. As illustrated, the camera system 106 includes a camera module 110 and a lens barrel assembly 112 that are secured, one to another.

The external enclosure 104 includes a transparent portion 302 (e.g., made from glass, plastic, and so on) to prevent contaminants from entering through the aperture 108. The external enclosure 104 may be formed from a variety of different materials, including plastics, metals (e.g., through CNC machining, injection molding), and so forth.

The external enclosure 104 is formed as having an angled portion 304 configured to support the camera system 106 at an angle relative to an outer surface of the external enclosure 104 as described in relation to FIG. 2. The angled portion 304 is formed as an integral part of the external enclosure 104 in this example. Other configurations are also contemplated, however, such as to form the aperture 108 as generally perpendicular to the outer surface of the external enclosure 104.

The aperture 108 is formed in a generally circular shape in this example and is shown in cross section. Other shapes are also contemplated, both along an axis parallel to the aperture 108 as well as perpendicular to (e.g., the sides) of the aperture 108, i.e., vertical and horizontal directions. For instance, the circular shape with generally parallel sides in the illustrated example may be replaced with an octagonal shape with sloped sides.

The lens barrel assembly 112 is also illustrated as including an interface geometry 114 that is configured to promote alignment of the lens barrel assembly 112, and consequently the camera module 106 and sensors 306 of the camera system 106, with the aperture 108. In this way, a field of view of the sensors 306 may be configured to capture images of a scene external to the external enclosure 104. This alignment may be promoted in a variety of ways, an example of which is described as follows and shown in a corresponding figure.

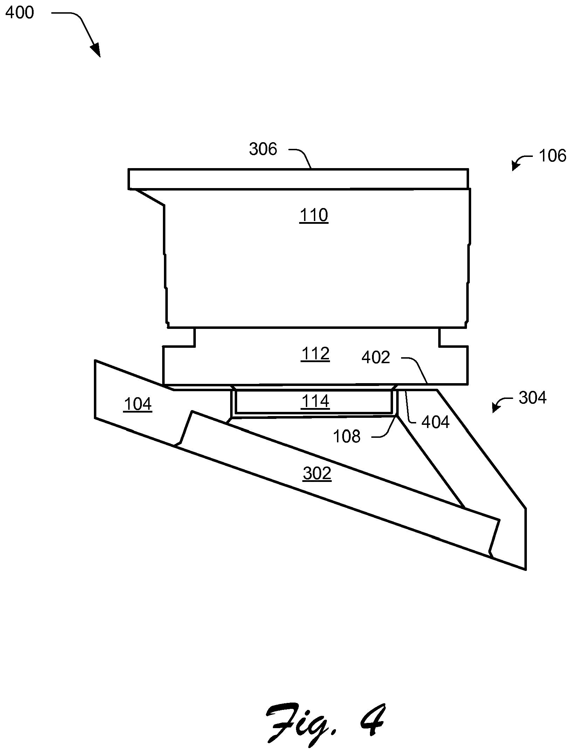

FIG. 4 depicts an example implementation 400 in which the interface geometry 114 of the camera system 106 is illustrated as engaging an aperture 108 of an external enclosure 104. The interface geometry 114 is disposed within the aperture 108 such that lens elements and a sensor 306 of the camera module 110 are aligned with the aperture.

Additionally, the interface geometry 114 may be sized to help secure the camera system 106 to the external enclosure 104, such as to cause mechanical binding if an attempt is made at removal "off-axis" to an axis defined by the aperture 108 for insertion and removal. In this example, the interface geometry 114 is configured as a protrusion to extend into the aperture 108 and configured on a surface 402 of the lens barrel assembly 112 that is configured to contact an internal surface 404 of the external enclosure 104. In this way, the camera system 106 may be securely aligned to the aperture 108 and supported by the external enclosure 104, which may be used to align a field-of-view of the camera system 106 as further described below and shown in a corresponding figure.

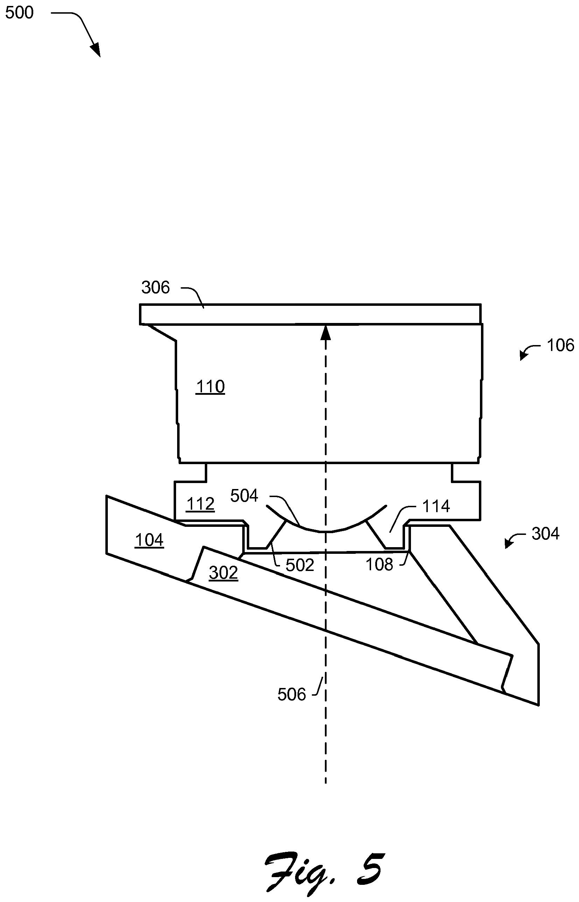

FIG. 5 depicts an example implementation 500 showing a cross section of internal geometry of the camera module 110 and lens barrel assembly 112 in relation to the interface geometry 114 and aperture 108. The lens barrel assembly 112 is illustrated as including an opening 502 formed in the interface geometry 114 that is configured to permit light to pass through one or more lens elements 504.

An axis 506 of light entry is shown through use of a dashed line and as generally perpendicular to a sensor 306 of the camera module 110. In this way, a field-of-view of the sensors used to capture images may be aligned with the aperture 108 to capture images external to the external enclosure 104. The lens barrel assembly may be configured in a variety of ways, an example of which is described as follows and shown in a corresponding figure.

FIG. 6 depicts an example implementation 600 showing the lens barrel assembly 112 and interface geometry 114 in greater detail. In this example, the interface geometry 114 is formed as generally circular and as having a flat outer side and curved inner sides that substantially surround an opening 602 configured to permit passage of light to the one or more lens elements as shown in FIG. 5.

The lens barrel assembly 112 includes a lens barrel 604 having at least one side that is configured to retain the one or more lens elements 504 of FIG. 5 and the surface 402, which in this instance is generally perpendicular to the side of the lens barrel 604. The lens barrel 604 is also illustrated as including a plurality of threads that form a connection potion, via which, the lens barrel 604 may be attached to a housing of the camera module 110. Other examples are also contemplated, such as a ride that "snaps into place" through tension and so on.

Another example of a lens barrel assembly 608 is also illustrated that does not include an interface geometry. Thus, by contrasting the lens barrel assembly 112 with the other example, it should be readily apparent that the interface geometry may serve as an aid to alignment with the aperture 108 as well as to secure the lens barrel assembly 112 to the external enclosure 104 as previously described. A wide variety of other shapes, protrusions, and arrangements are also contemplated without departing from the spirit and scope thereof.

### Example System and Device

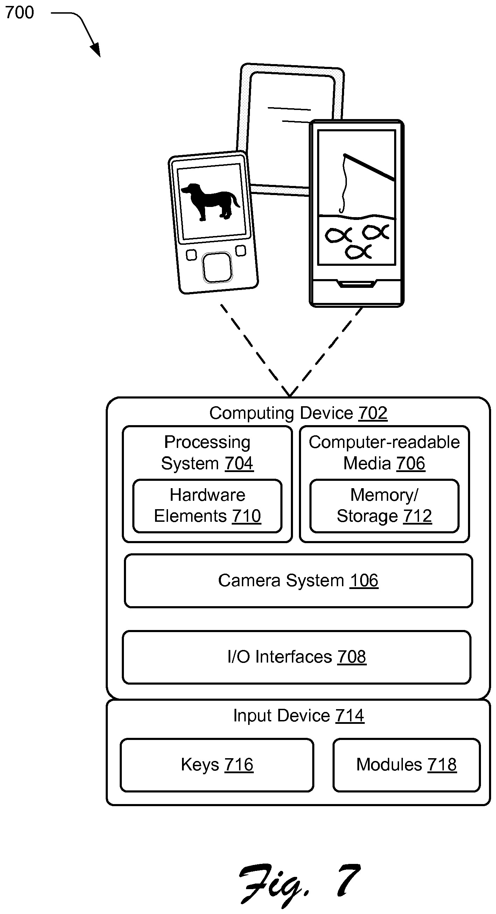

FIG. 7 illustrates an example system generally at 700 that includes an example computing device 702 that is representative of one or more computing systems and/or devices that may implement the various techniques described herein. The computing device 702 may be, for example, configured to assume a mobile configuration through use of a housing formed and sized to be grasped and carried by one or more hands of a user, illustrated examples of which include a mobile phone, mobile game and music device, and tablet computer although other examples are also contemplated as previously described in relation to FIG. 1. Also, as the computing device 702 may incorporate features described herein, a camera system 106 is illustrated as part of the computing device 702, although inclusion as part of the input device 714 is also contemplated.

The example computing device 702 as illustrated includes a processing system 704, one or more computer-readable media 706, and one or more I/O interface 708 that are communicatively coupled, one to another. Although not shown, the computing device 702 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 704 is representative of functionality to perform one or more operations using hardware. Accordingly, the processing system 704 is illustrated as including hardware element 710 that may be configured as processors, functional blocks, and so forth. This may include implementation in hardware as an application specific integrated circuit or other logic device formed using one or more semiconductors. The hardware elements 710 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 706 is illustrated as including memory/storage 712. The memory/storage 712 represents memory/storage capacity associated with one or more computer-readable media. The memory/storage component 712 may include volatile media (such as random access memory (RAM)) and/or nonvolatile media (such as read only memory (ROM), Flash memory, optical disks, magnetic disks, and so forth). The memory/storage component 712 may include fixed media (e.g., RAM, ROM, a fixed hard drive, and so on) as well as removable media (e.g., Flash memory, a removable hard drive, an optical disc, and so forth). The computer-readable media 706 may be configured in a variety of other ways as further described below.

Input/output interface(s) 708 are representative of functionality to allow a user to enter commands and information to computing device 702, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 702 may be configured in a variety of ways to support user interaction.

The computing device 702 is further illustrated as being communicatively and physically coupled to an input device 714 that is physically and communicatively removable from the computing device 702. In this way, a variety of different input devices may be coupled to the computing device 702 having a wide variety of configurations to support a wide variety of functionality. In this example, the input device 714 includes one or more keys 716, which may be configured as pressure sensitive keys, mechanically switched keys, and so forth.

The input device 714 is further illustrated as include one or more modules 718 that may be configured to support a variety of functionality. The one or more modules 718, for instance, may be configured to process analog and/or digital signals received from the keys 716 to determine whether a keystroke was intended, determine whether an input is indicative of resting pressure, support authentication of the input device 714 for operation with the computing device 702, and so on.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 702. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 702, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 710 and computer-readable media 706 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 710. The computing device 702 may be configured to implement particular instructions and/or functions corresponding to the software and/or hardware modules. Accordingly, implementation of a module that is executable by the computing device 702 as software may be achieved at least partially in hardware, e.g., through use of computer-readable storage media and/or hardware elements 710 of the processing system 704. The instructions and/or functions may be executable/operable by one or more articles of manufacture (for example, one or more computing devices 702 and/or processing systems 704) to implement techniques, modules, and examples described herein.

### Conclusion

Although the example implementations have been described in language specific to structural features and/or methodological acts, it is to be understood that the implementations are defined in the appended claims.

## Claims

1. An assembly (112) comprising:
one or more lens elements (504); and
a lens barrel configured to retain the one or more lens elements, the lens barrel including:
a connection portion configured to provide a physical coupling to a camera module (110); and
an interface geometry (114) having a complementary shape to an aperture (108) of an external enclosure (104) of a mobile computing device (102) sufficient to align the lens barrel and the one or more lens elements in relation to the external enclosure (104),
wherein the interface geometry (114) is configured as a protrusion extending out of an end surface of the lens barrel opposite to the camera module (110) coupled to the connection portion, and configured to extend into the aperture (108) of the external enclosure (104).

2. An assembly as described in claim 1, wherein the lens barrel is configured as a barrel (604) having at least one side that is configured to retain the one or more lens elements (504) and the interface geometry (114) is formed on a surface (402) that is generally perpendicular to the at least one side.

3. An assembly as described in claim 1, wherein the interface geometry (114) is configured to at least partially surround an opening (602) configured to permit passage of light to the one or more lens elements (504).

4. An assembly as described in claim 1, wherein the one or more lens elements (504) are configured to support a fixed focus in conjunction with the camera module.

5. An assembly as described in claim 1, wherein the one or more lens elements (504) are configured to support adjustment of focus involving movement of the one or more lens elements.

6. An assembly as described in claim 1, wherein the connection portion is configured to provide the physical coupling to the camera module (110) through use of one or more threaded portions.

7. An assembly as described in claim 1, wherein the interface geometry (114) is configured to support direct mounting to the aperture (108).

8. A camera system (106) comprising:
an assembly (112) according to any one of the preceding claims; wherein the camera module (110) includes a housing and one or more sensors (306) configured to capture images,
wherein the assembly (112) is attached to the housing of the camera module, and wherein the interface geometry is configured to be disposed within the aperture the external enclosure (104) of the mobile computing device (102) to align the assembly and the camera module in relation to the external enclosure such that said one or more sensors are configured to capture images outside the external enclosure.

9. An apparatus (102) comprising:
a camera system (106) according to claim 8; wherein the external enclosure (104) has the aperture (108) formed therein, and camera system is disposed within the external enclosure.

## Patentansprüche

1. Anordnung (112), umfassend:
ein oder mehrere Linsenelemente (504); und
einen Tubus, der konfiguriert ist, das eine oder die mehreren Linsenelemente zurückzuhalten, der Tubus enthaltend:
einen Verbindungsabschnitt, der konfiguriert ist, eine physische Kopplung zu einem Kameramodul (110) bereitzustellen; und
eine Schnittstellengeometrie (114) mit einer komplementären Form zu einer Blendenöffnung (108) einer externen Umgrenzung (104) einer mobilen Rechenvorrichtung (102), geeignet den Tubus und das eine oder die mehreren Linsenelemente in Bezug zur externen Umgrenzung (104) auszurichten,
wobei die Schnittstellengeometrie (114) als ein Fortsatz konfiguriert ist, der sich von einer Endfläche des Tubus, gegenüber dem Kameramodul (110), das mit dem Verbindungsabschnitt gekoppelt ist, erstreckt,
und konfiguriert ist, sich in die Blendenöffnung (108) der externen Umgrenzung (104) zu erstrecken.

2. Anordnung nach Anspruch 1, wobei der Tubus als Zylinder (604) mit zumindest einer Seite, die konfiguriert ist, das eine oder die mehreren Linsenelemente (504) zurückzuhalten, konfiguriert ist, und die Schnittstellengeometrie (114) auf einer Fläche (402) gebildet ist, die im Allgemeinen senkrecht zu der zumindest einen Seite ist.

3. Anordnung nach Anspruch 1, wobei die Schnittstellengeometrie (114) konfiguriert ist, zumindest teilweise eine Öffnung (602) zu umgeben, die konfiguriert ist, einen Durchgang von Licht zu dem einen oder den mehreren Linsenelementen (504) zu erlauben.

4. Anordnung nach Anspruch 1, wobei das eine oder die mehreren Linsenelemente (504) konfiguriert sind, einen Fixfokus in Verbindung mit dem Kameramodul zu unterstützen.

5. Anordnung nach Anspruch 1, wobei das eine oder die mehr Linsenelemente (504) konfiguriert sind eine Anpassung von Fokus, eine Bewegung der einen oder mehreren Linsenelemente einschließend, zu unterstützen.

6. Anordnung nach Anspruch 1, wobei der Verbindungsabschnitt konfiguriert ist, die physische Kopplung mit dem Kameramodul (110) durch Verwendung eines Gewindeabschnitts oder mehrerer Gewindeabschnitte zu unterstützen.

7. Anordnung nach Anspruch 1, wobei die Schnittstellengeometrie (114) konfiguriert ist, eine direkte Montage an der Blendenöffnung (108) zu unterstützen.

8. Kamerasystem (106), umfassend:
eine Anordnung (112) nach einem der vorangehenden Ansprüche; wobei das Kameramodul (110) ein Gehäuse und einen oder mehrere Sensoren (306), die konfiguriert sind, Bilder aufzunehmen, umfasst,
wobei die Anordnung (112) am Gehäuse des Kameramoduls befestigt ist, und
wobei die Schnittstellengeometrie konfiguriert ist, innerhalb der Blendenöffnung der externen Umgrenzung (104) der mobilen Rechenvorrichtung (102) angeordnet zu sein, um die Anordnung und das Kameramodul in Bezug auf die externe Umgrenzung auszurichten, sodass ein oder mehr Sensoren konfiguriert sind, Bilder außerhalb der externen Umgrenzung aufzunehmen.

9. Vorrichtung (102), umfassend:
ein Kamerasystem (1) nach Anspruch 8, wobei in der externen Umgrenzung (104) die Blendenöffnung (108) gebildet ist, und
und ein Kamerasystem innerhalb der externen Umgrenzung angeordnet ist.

## Revendications

1. Assemblage (112) comprenant :
un ou plusieurs éléments d'objectif (504) ; et
un barillet d'objectif configuré de manière à retenir ledit un ou lesdits plusieurs éléments d'objectif, le barillet d'objectif incluant :
une partie de connexion configurée de manière à fournir un couplage physique à un module de caméra (110) ; et
une géométrie d'interface (114) présentant une forme complémentaire au niveau d'une ouverture (108) d'une enveloppe externe (104) d'un dispositif informatique mobile (102), suffisante pour aligner le barillet d'objectif et ledit un ou lesdits éléments d'objectif relativement à l'enveloppe externe (104) ;
dans lequel la géométrie d'interface (114) est configurée sous la forme d'une saillie s'étendant à partir d'une surface d'extrémité du barillet d'objectif opposée au module de caméra (110) couplé à la partie de connexion, et configurée de manière à s'étendre dans l'ouverture (108) de l'enveloppe externe (104).

2. Assemblage selon la revendication 1, dans lequel le barillet d'objectif est configuré sous la forme d'un barillet (604) présentant au moins un côté qui est configuré de manière à retenir ledit un ou lesdits plusieurs éléments d'objectif (504), et la géométrie d'interface (114) est formée sur une surface (402) qui est généralement perpendiculaire audit au moins un côté.

3. Assemblage selon la revendication 1, dans lequel la géométrie d'interface (114) est configurée de manière à entourer au moins partiellement une ouverture (602) configurée de manière à permettre le passage de la lumière à travers ledit un ou lesdites plusieurs éléments d'objectif (504).

4. Assemblage selon la revendication 1, dans lequel ledit un ou lesdits plusieurs éléments d'objectif (504) sont configurés de manière à prendre en charge une mise au point fixe conjointement avec le module de caméra.

5. Assemblage selon la revendication 1, dans lequel ledit un ou lesdits plusieurs éléments d'objectif (504) sont configurés de manière à prendre en charge un ajustement de mise au point impliquant un mouvement dudit un ou desdits plusieurs éléments d'objectif.

6. Assemblage selon la revendication 1, dans lequel la partie de connexion est configurée de manière à fournir le couplage physique au module de caméra (110) en faisant appel à une ou plusieurs parties filetées.

7. Assemblage selon la revendication 1, dans lequel la géométrie d'interface (114) est configurée de manière à prendre en charge un montage direct au niveau de l'ouverture (108).

8. Système de caméra (106) comprenant :
un assemblage (112) selon l'une quelconque des revendications précédentes ;
dans lequel le module de caméra (110) inclut un boîtier, et un ou plusieurs capteurs (306) configurés de manière à capturer des images ;
dans lequel l'assemblage (112) est fixé au boîtier du module de caméra, et dans lequel la géométrie d'interface est configurée de manière à être disposée à l'intérieur de l'ouverture de l'enveloppe externe (104) du dispositif informatique mobile (102) pour aligner l'assemblage et le module de caméra relativement à l'enveloppe externe, de sorte que ledit un ou lesdits plusieurs capteurs sont configurés de manière à capturer des images en dehors de l'enveloppe externe.

9. Appareil (102) comprenant :
un système de caméra (1) selon la revendication 8 ; dans lequel l'enveloppe externe (104) présente l'ouverture (108) formée dans celle-ci, et le système de caméra est disposé au sein de l'enveloppe externe.
